# EUROPÄISCHE PATENTANMELDUNG

(11) **EP 1 543 905 A1**
(43) Veröffentlichungstag der Anmeldung: **22.06.2005**
(21) Anmeldenummer: 04029643.6
(22) Anmeldetag: 15.12.2004
(51) Int. Cl.: B23B 39/00, B24B 33/02, B24B 33/08

(54) **Verfahren und Vorrichtung zur Bearbeitung der Oberfläche einer zylindrischen Höhlung eines Werkstücks**

(30) Priorität: 16.12.2003 DE 10359347
(71) Anmelder: DaimlerChrysler AG, 70567 Stuttgart (DE)
(72) Erfinder: Böhm, Jens, 73765 Neuhausen a.d.F. (DE); Jütting, Wolfgang, Dr., 89075 Ulm (DE); Karl, Ekkehard, 73765 Neuhausen (DE); Schweickert, Stefan, Dr., 73207 Plochingen (DE)

(57) **Zusammenfassung**

Die Erfindung betrifft ein Verfahren und eine Vorrichtung (1) zur Bearbeitung der Oberfläche einer zylindrischen Höhlung eines Werkstücks. Um in einfacher Weise eine reproduzierbare hohe Qualität der Oberfläche der Höhlung zu erzielen, wird vorgeschlagen, dass die Oberfläche in einem einzigen Arbeitsgang zuerst mittels eines Feindrehwerkzeuges (3) vorbearbeitet und anschließend mittels eines Honwerkzeuges (2) gehont wird. Die Vorrichtung (1) ist dabei ein Kombinationswerkzeug, in das das Honwerkzeug (2) und das Feindrehwerkzeug (3) integriert sind, welche eine gemeinsame rotatorische Antriebsachse besitzen, wobei das Feindrehwerkzeug (3) in Bearbeitungsrichtung dem Honwerkzeug (2) vorgesetzt angeordnet ist.

## Beschreibung

Die Erfindung betrifft ein Verfahren und eine Vorrichtung zur Bearbeitung der Oberfläche einer zylindrischen Höhlung eines Werkstücks.

Um derartigen Höhlungen eine qualitativ hochwertige Oberfläche zu geben, wird bekanntermaßen die Bearbeitungstechnik des Honens angewandt. In üblicher Weise wird die Oberfläche vorher in der gleichen Aufspannung wie das Honen, häufig durch Feindrehen vorbearbeitet. Hierzu sind in den Bearbeitungszentren Werkzeugwechsler oder Rundtaktanlagen erforderlich. Beim Werkzeugwechsel und/oder beim Umspannen treten jedoch oft Lagefehler der Werkzeuge auf, die zu recht unterschiedlichen Bearbeitungsergebnissen führen. Somit ist einerseits die gewünschte Qualität der herzustellenden Oberfläche nicht gewährleistet und andererseits eine exakte Reproduzierbarkeit der Bearbeitungsergebnisse nicht möglich. Dies führt ohne aufwendige Qualitätskontrollen bei der Verwendung des Werkstückes zu einem unkalkulierbaren Betriebsverhalten, so dass in höchst unerwünschtem Maße unerwartete versagensbedingte Ausfälle des Werkstückes auftreten können.

Der Erfindung liegt die Aufgabe zugrunde, ein Verfahren und eine Vorrichtung aufzuzeigen, mittels dem bzw. der in einfacher Weise eine reproduzierbare hohe Qualität der Oberfläche einer zylindrischen Höhlung eines Werkstücks erzielt werden kann.

Die Aufgabe ist erfindungsgemäß durch die Merkmale des Patentanspruches 1 hinsichtlich des Verfahrens und durch die Merkmale des Patentanspruches 2 hinsichtlich der Vorrichtung gelöst.

Dank der Erfindung ist ein Werkzeug- und/oder Aufspannungswechsel nicht mehr erforderlich, so dass diesbezügliche Lagefehler der Bearbeitungswerkzeuge unterbleiben. Die Oberflächen der Höhlungen der Werkstücke können daher mit größtmöglicher Genauigkeit hergestellt werden und erlangen damit eine enorm hohe Qualität hinsichtlich ihrer gewünschten Gestaltung. Das Honen kann damit verbunden mit einem extrem geringen Aufmaß erfolgen. Aufgrund der bis zum Verschleiß der Bearbeitungswerkzeuge, also des Honwerkzeuges und des Feindreh- , bzw. Reibwerkzeuges, d.h. bis zu deren Austausch unverrückbar bleibenden Relativlage der Werkzeuge zueinander ist eine optimale Reproduzierbarkeit bei der Herstellung der Oberflächen gesichert. Durch die feste Zu- und Anordnung der Werkzeuge aneinander in einem gemeinsamen Kombinationswerkzeug und dem damit ermöglichten vereinfachten Bearbeitungsprozess der Oberfläche in einem einzigen Arbeitsgang wird zudem die Bearbeitungszeit verkürzt, wodurch Herstellungskosten eingespart werden. Des weiteren wird der apparative Aufwand verringert, da separate Arbeitsstationen für jeweils das Honen und Feindrehen und/oder Rundtakt- und andere Transfervorrichtungen entfallen, wodurch gleichfalls Arbeitsraum eingespart wird.

In einer bevorzugten Weiterbildung der erfindungsgemäßen Vorrichtung nach Anspruch 3 ist das Feindrehwerkzeug an der freien Stirnseite des Honwerkzeuges angebracht. Hier bildet das Honwerkzeug durch die Befestigung des Feindrehwerkzeuges an dem Honwerkzeug in einfacher Weise bauteilsparend selbst die Antriebsachse für beide Bearbeitungswerkzeuge, wobei das Honwerkzeug in einer rotatorisch antreibbaren Einspannung gehalten ist. Das längliche Feindrehwerkzeug ist zur Erbringung einer hohen Stabilität für das Kombinationswerkzeug und zur Ermöglichung der Bearbeitung von Oberflächen auch bei kleineren Durchmessern der Werkstückhöhlungen koaxial als Verlängerung des stabförmigen Honwerkzeuges angeordnet. Die Befestigung des Feindrehwerkzeugs am Honwerkzeug kann beispielsweise in einem Verschrauben bestehen, sie sollte vorzugsweise jedoch lösbar sein, um ein selektives Austauschen der Einzelwerkzeuge bei Verschleiß zu gewährleisten.

In einer weiteren bevorzugten Ausgestaltung der erfindungsgemäßen Vorrichtung nach Anspruch 4 sind das Feindrehwerkzeug und das Honwerkzeug koaxial auf einem gemeinsamen Träger befestigt, der die Antriebsachse bildet und der in einer hubbeweglichen rotatorisch antreibbaren Einspannung aufgenommen ist. Hierdurch wird zum einen der Zusammenbau des Kombinationswerkzeuges vereinfacht, wobei die Bearbeitungswerkzeuge sich beim Auffädeln auf den Träger selbsttätig radial zueinander ausrichten. Zum anderen können die Bearbeitungswerkzeuge in axialem Abstand zueinander fest positioniert werden um die Spanabfuhr des ersten, d.h. des Feindrehwerkzeuges zu verbessern. Des weiteren kann der Träger die für die Bearbeitung notwendige Steifigkeit des Kombinationswerkzeuges ohne weiteres aufbringen. Weiterhin ist das Kombinationswerkzeug durch die Anordnung eines Trägers nicht auf spezielle Formen der Bearbeitungswerkzeuge festgelegt, so dass dieses mit dem Träger universell eingesetzt werden kann.

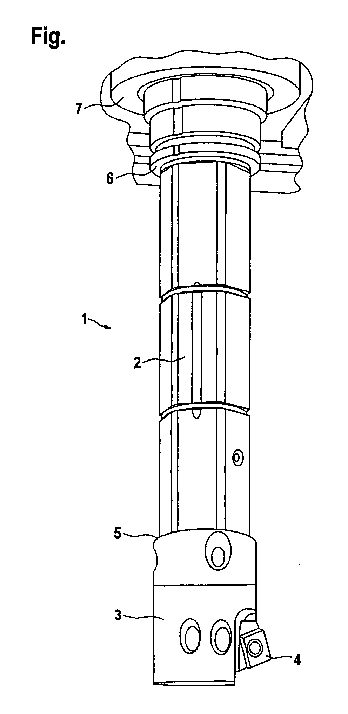

Nachfolgend ist die Erfindung anhand eines in der Zeichnung dargestellten Ausführungsbeispieles näher erläutert; dabei zeigt die Figur in einer perspektivischen Ansicht eine erfindungsgemäße Vorrichtung mit einem Feindrehwerkzeug und einem Honwerkzeug in einer gemeinsamen Einspannung.

In der Figur ist eine Vorrichtung 1 zur Bearbeitung der Oberfläche einer zylindrischen Höhlung eines Werkstücks dargestellt, wobei das Werkstück beispielsweise ein Pleuel und die zugehörige Höhlung eine Pleuelauge sein kann. Denkbar ist auch die Verwendung des Werkstückes als Kurbelgehäuse oder Zylinderlaufbuchse, wobei die Höhlung dazu die Zylinderlaufbohrung bzw. die Zylinderlaufbahn ist.

Die Vorrichtung 1 ist als Kombinationswerkzeug ausgebildet und beinhaltet ein stabförmiges Honwerkzeug 2, insbesondere ein Dornhonwerkzeug, und ein weitgehend zylindrisches Feindrehwerkzeug 3, wobei diese Bearbeitungswerkzeuge im Kombinationswerkzeug integriert sind und eine gemeinsame rotatorische Antriebsachse besitzen. Das mit einer Schneidplatte 4 versehene Feindrehwerkzeug 3 ist zum Honwerkzeug 2 in Bearbeitungsrichtung vorgesetzt angeordnet und ist an dessen vor dem Zusammenbau freien Stirnseite 5 angebracht, vorzugsweise lösbar verschraubt, wobei in Anbringposition die beiden Bearbeitungswerkzeuge 2 und 3 zueinander koaxial angeordnet sind und das Feindrehwerkzeug 3 eine Verlängerung des Honwerkzeuges 2 bildet. Dieses ist mit seinem dem Feindrehwerkzeug 3 abgewandten Ende 6 in einer rotatorisch antreibbaren Einspannung 7 aufgenommen und bildet die Antriebsachse für beide Bearbeitungswerkzeuge 2 und 3.

Zur Bearbeitung der Oberfläche wird das Kombinationswerkzeug in die Höhlung des Werkstückes eingeführt und in Betrieb gesetzt. Der rotatorischen Bewegung des Werkzeuges wird dabei eine translatorische Absenk- bzw. Hubbewegung überlagert. Hierbei bearbeitet zunächst das als erstes Werkzeug in die Höhlung eintauchende Feindreh- oder Reibwerkzeug 3 mit seiner Schneidplatte 4 die Werkstückoberfläche zerspanend vor, wonach die vorbearbeitete Oberfläche in Eingriff mit Honleisten des dem Feindrehwerkzeug 3 nachgeordneten Honwerkzeuges 2 gerät, das mit geringem Aufmaß die Oberfläche endbearbeitet und dabei glättet.

## Patentansprüche

1. Verfahren zur Bearbeitung der Oberfläche einer zylindrischen Höhlung eines Werkstücks,
**dadurch gekennzeichnet,**
**dass** die Oberfläche in einem einzigen Arbeitsgang zuerst mittels eines Feindrehwerkzeuges (3) vorbearbeitet und anschließend mittels eines Honwerkzeuges (2) gehont wird.

2. Vorrichtung zur Bearbeitung der Oberfläche einer zylindrischen Höhlung eines Werkstücks,
**dadurch gekennzeichnet,**
**dass** die Vorrichtung (1) ein Kombinationswerkzeug ist, in das ein Honwerkzeug (2) und ein Feindrehwerkzeug (3) integriert sind, welche eine gemeinsame rotatorische Antriebsachse besitzen, wobei das Feindrehwerkzeug (3) in Bearbeitungsrichtung dem Honwerkzeug (2) vorgesetzt angeordnet ist.

3. Vorrichtung nach Anspruch 2,
**dadurch gekennzeichnet,**
**dass** das Feindrehwerkzeug (3) an der freien Stirnseite (5) des Honwerkzeuges (2) angebracht ist.

4. Vorrichtung nach Anspruch 2,
**dadurch gekennzeichnet,**
**dass** das Feindrehwerkzeug (3) und das Honwerkzeug (2) koaxial auf einem gemeinsamen Träger befestigt sind, der die Antriebsachse bildet und der in einer hubbeweglichen rotatorisch antreibbaren Einspannung (7) aufgenommen ist.
